# EUROPEAN PATENT APPLICATION

(11) **EP 1 439 074 A1**
(43) Date of publication of application: **21.07.2004**
(21) Application number: 02777962.8
(22) Date of filing: 25.10.2002
(51) Int. Cl.: B41J 29/38, B41J 5/30, G06F 3/12

(54) **PRINTER**

(30) Priority: 25.10.2001 JP 2001327379
(71) Applicant: SEIKO EPSON CORPORATION, Shinjuku-ku, Tokyo 163-0811 (JP)
(72) Inventor: GASSHO, Kazuhito, Suwa-shi, Nagano 392-8502 (JP)
(74) Representative: Sturt, Clifford Mark
(86) International application number: PCT/JP2002/011113
(87) International publication number: WO 2003/035405

(57) **Abstract**

When an interrupt request occurs, a language interpreter (64) holds a complete pointer (D46) as information specifying a position from which a language interpretation is to be started when printing of interrupted print job data is restarted in a job attribute database (72). It also holds information on print setting in the position indicated by the complete pointer (D46) in the job attribute database (72). When the printing of the interrupted print job data is restarted, print setting is made based on the information on the print setting held in the job attribute database (72), and the language interpretation of the print job data is started from the position of the complete pointer (D46) held in the job attribute database (72). Consequently, when interrupt printing occurs, the user's waiting time before the printing of the interrupted print job is restarted can be reduced as much as possible.

## Description

### BACKGROUND OF THE INVENTION

### Field of the Invention

The present invention relates to a printer, and particularly relates to a printer capable of so-called interrupt printing.

### Related Background Art

These days, a print system in which a printer is shared through a network has been increasingly used. Namely, by connecting plural client computers to one network and connecting, for example, one printer to this network, one printer can accept print job data from the plural client computers and print the print job data.

In such a print system using the network, various pieces of print job data are transmitted from plural client computers to a printer. The transmitted print job data includes print job data with various priorities from print job data which a user needs to print very urgently to print job data which the user does not need to print very urgently. Therefore, some network-compatible printers have the function of controlling the sequence of printing according to the priority of received print job data. Interrupt printing is an example of such a controlling function.

Namely, when, in the middle of printing based on one piece of print job data with a low priority, another piece of print job data with a higher priority is received, a print process is interrupted, and printing of the higher priority print job data is executed. At a point in time when the printing of the higher priority print job data has been completed, the printing of the interrupted print job data is restarted.

However, in a related printer, information on to what extent the printing of interrupted print job data has been completed is held as the number of printed pages or the number of printed sheets. Hence, a language interpreter of the printer needs to perform a language interpretation process again from the beginning of the print job data the printing of which is to be restarted and find out the position of the print job data corresponding to a page or sheet at which the printing has been completed.

The language interpretation process is a process of interpreting commands or pieces of data contained in the print job data one by one and creating a print request expanded into print image data capable of being printed by a print engine. Therefore, in general, the language interpretation process requires many hours, and even if interrupt printing has been completed, a user who has undergone print interruption has to wait for a restart of printing until the printer specifies the restart position of the printing while performing the language interpretation.

### SUMMARY OF THE INVENTION

It is therefore an object of the invention that, when the print process of print job data undergoing the print process is interrupted and printing of higher priority print job data is executed, a processing time for restarting the interrupted printing of the print job data becomes as short as possible.

In order to accomplish the aforementioned object, according to one aspect of the present invention, a printer comprises:
an interrupt print acceptor which accepts interrupt printing;
an interrupter which interrupts a print job undergoing a print process when the interrupt acceptor is accepted the interrupt printing;
a restart position information holder which holds a position in data on the print job, from which a language interpretation is to be restarted when the print process of the print job interrupted by the interrupter is restarted later, as restart position information;
a print setting information holder which holds information on print setting, which is set for the print job in the position in the data on the print job designated by the restart position information, as print setting information; and
a print restarter which performs print setting based on the print setting information held by the print setting information holder and performs the language interpretation from the position in the data on the print job designated by the restart position information held by the restart position information holder, after the interrupt printing is completed.

In this case, the restart position information may be set at a break between one sheet and its next sheet in the data on the print job.

In addition, the printer may further comprise a print continuator which, if the printing of the print job undergoing the print process is in the middle of one sheet when the interrupt print acceptor is accepted the interrupt printing, continues the printing to the end of the sheet.

In this case, the restart position information may be set at a break between the sheet printed to the end and its next sheet in the data on the print job.

In addition, the print setting information may be sequentially held in the print setting information holder while the language interpretation of the data on the print job is performed.

Moreover, the print setting information held in the print setting information holder may be generated for each print job and deleted when a print process of the print job is completed.

On the other hand, the printer may further comprise a forced ejector which, even if the printing of the print job undergoing the print process is in the middle of one sheet when the interrupt print acceptor is accepted the interrupt printing, immediately interrupts the print process and forcibly ejects the sheet undergoing the print process.

In this case, the restart position information may be set at a break between the sheet whose printing is interrupted and its previous sheet in the data on the print job.

In addition, the print setting information may be sequentially held in a temporary holder while the language interpretation of the data on the print job is performed, and
at a point in time when the printing of one sheet is completed, the print setting information held in the temporary holder may be transferred to the print setting information holder.

Moreover, the print setting information held in the temporary holder and the print setting information held in the print setting information holder may be generated for each print job and deleted from the temporary holder and the print setting information holder when a print process of the print job is completed.

In these cases, the printer may further comprise:
a print job storage in which a received print job is stored; and
a restart print job transmitter which reads the print job whose print process was interrupted and transmits the data on the print job from the beginning to the print restarter after the interrupt printing is completed.

In this case, the print job stored in the print job storage is not deleted when the print process of the print job is started, but it may be deleted when the print process of the print job is completed.

Furthermore, the present invention may be implemented as a control method of controlling a printer in the same manner as mentioned above, and it may be implemented as a program which controls the printer in the same manner as mentioned above and as a record medium on which such program is recorded. Moreover, it may be implemented as a print system in which the above-mentioned printer and a client computer are connected via a network.

### BRIEF DESCRIPTION OF THE DRAWINGS

Fig. 1 is a diagram showing an example of the hardware configuration of a print system according to each embodiment;
Fig. 2 is a block diagram explaining a process when interrupt printing is performed in a print system according to a first embodiment;
Fig. 3 is a diagram showing an example of the structure of print job data transmitted from a client computer to a printer in the print system according to this embodiment;
Fig. 4 is a diagram showing the structure of print data contained in the print job data and an example of a position therein at which an interrupt request occurs and a position of a complete pointer;
Fig. 5 is a diagram showing an example of the structure of an attribute information table in this embodiment;
Fig. 6 is a flowchart explaining a job control process executed by a job controller according to this embodiment (First process);
Fig. 7 is a flowchart explaining the job control process executed by the job controller according to this embodiment (Second process);
Fig. 8 is a flowchart explaining a language interpretation process executed by a language interpreter according to the first embodiment;
Fig. 9 is a block diagram explaining a process when interrupt printing is performed in a print system according to a second embodiment;
Fig. 10 is a diagram showing an example of the structure of a temporary attribute information table in this embodiment;
Fig. 11 is a diagram showing an example of the structure of a formal attribute information table in this embodiment;
Fig. 12 is a diagram showing the structure of print data contained in print job data and an example of a position therein at which an interrupt request occurs and a position of a complete pointer;
Fig. 13 is a flowchart explaining a language interpretation process executed by a language interpreter according to the second embodiment; and
Fig. 14 is a flowchart explaining an attribute information table transfer process executed by the language interpreter according to the second embodiment.

### DESCRIPTION OF THE PREFERRED EMBODIMENTS

### [First Embodiment]

A printer according to the first embodiment is designed to hold the position of interruption in print job data when interrupt printing occurs as a complete pointer, and perform a language interpretation process from the complete pointer when printing is restarted after the interruption. Moreover, by holding aside information on print setting set by the print job data by the time the complete pointer is reached, printing can be performed in appropriate setting even after printing is restarted. Further details will be given below.

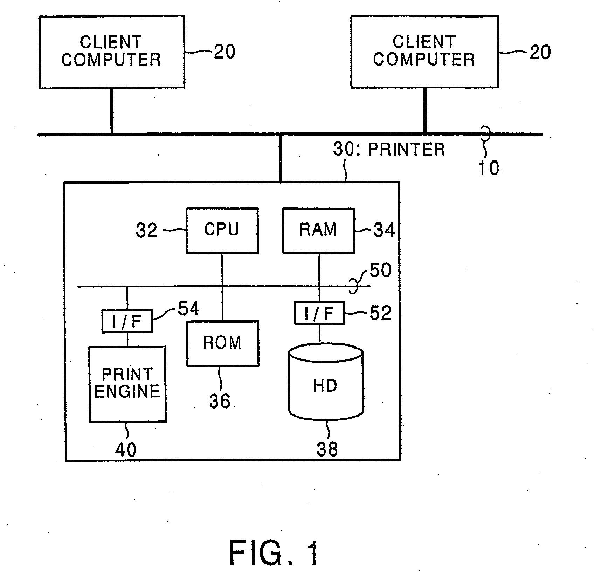

First, the configuration of a print system according to this embodiment will be explained based on Fig. 1. Fig. 1 is a block diagram showing the hardware configuration of the print system according to this embodiment.

As shown in Fig. 1, the print system according to this embodiment includes one or more than one client computer 20 connected to a network 10 and one printer 30 also connected to the network 10. The client computer 20 is any of various kinds of computers called a host computer and a personal computer, and in this embodiment, in particular, it is a computer which generates print job data and transmits the print job data to the printer 30 via the network 10.

In this embodiment, the printer 30 is a so-called network printer and includes a CPU (Central Processing Unit) 32, a RAM (Random Access Memory) 34, a ROM (Read Only Memory) 36, a hard disk 38, and a print engine 40. The CPU 32, the RAM 34, and the ROM 36 are interconnected via an internal bus 50. The hard disk 38 is connected to the internal bus 50 via an interface 52, and the print engine 40 is connected to the internal bus 50 via an interface 54.

The hard disk 38 is built in the printer 30 in this embodiment, but it may be provided outside the printer 30, or may be provided separately via the network 10. The hard disk 32 constitutes an auxiliary memory in this embodiment.

In a normal print process, the printer 30 according to this embodiment temporarily stores print job data transmitted from the client computer 20 in a job spooler which is formed in the hard disk 38. According to the availability of the print engine 40, the printer 30 performs a language interpretation of the print job data, generates a print request, and performs printing on print sheets by the print engine 40.

A series of processes from the reception of the print job data to the performance of printing is realized by the execution of various kinds of tasks by the CPU 32. During this series of processes, the CPU 32 accesses the RAM34, the ROM 36, or the hard disk 38 as required. The CPU 32 constitutes a central processing unit in this embodiment.

In particular, the printer 30 according to this embodiment can perform interrupt printing according to the priority of the received print job data. Namely, when, in the middle of performing a print process for one piece of print job data, the printer 30 receives another piece of print job data with a higher priority, the printer 30 interrupts the print process and starts printing this higher priority print job data. After the completion of printing of this higher priority print job data, the printer 30 restarts printing the interrupted print job data.

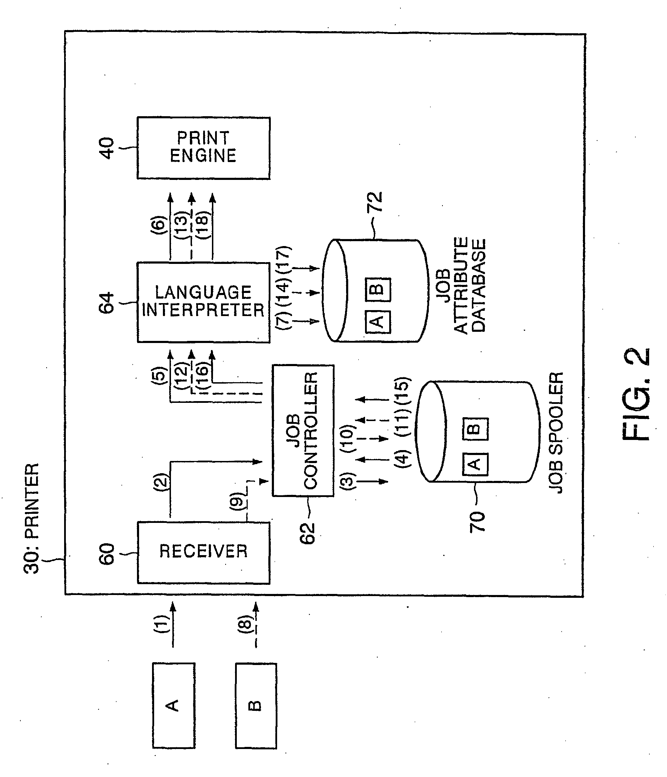

The process of the interrupt printing in the print system according to this embodiment will be explained in detail based on Fig. 2. Fig. 2 is a block diagram explaining the process of the interrupt printing in the print system according to this embodiment.

As shown in Fig. 2, the printer 30 includes a receiver 60, a job controller 52, and a language interpreter 64. In this embodiment, these receiver 60, job controller 62, and language interpreter 64 are respectively realized by the execution of a receive process task, a job control process task, and a language interpretation process task by the CPU 32. Namely, in this embodiment, these receiver 60, job controller 62, and language interpreter 64 are realized by software processing. However, these receiver 60, job controller 62, and language interpreter 64 may be realized by hardware such as an ASIC (Application Specific IC).

The printer 30 also includes a job spooler 70 and a job attribute database 72. In this embodiment, these job spooler 70 and job attribute database 72 are formed in the hard disk 38. However, the job attribute database 72 may be formed in the RAM 34, and the job spooler 70 also may be formed in the RAM 34 if its memory capacity permits.

As shown in Fig. 2, (1) it is assumed that the receiver 60 of the printer 30 has received print job data "A" via the network 10. The receiver 60 (2) transmits the received print job data "A" to the job controller 62. The job controller 62 (3) stores the print job data "A" in the job spooler 70.

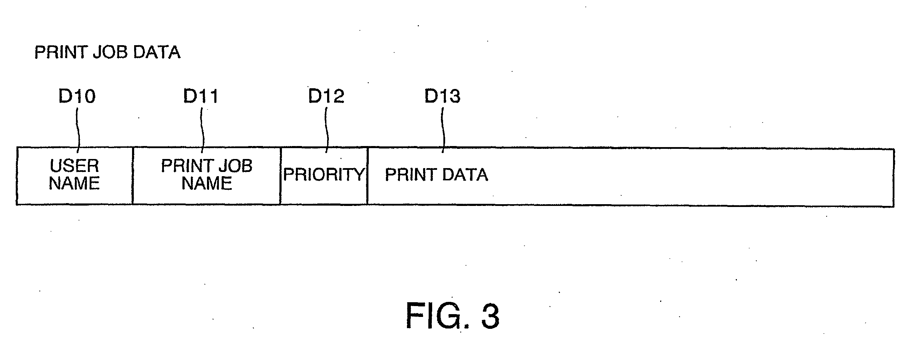

Fig. 3 is a diagram showing the data format of this print job data. As shown in Fig. 3, the print job data includes a user name D10, a print job name D11, a priority D12, and print data D13 as data items. In the user name D10, the name of a user who generated this print job data or a computer name of the client computer 20 which generated this print job data is stored.

In the print job name D11, the name of this print job data is stored. The name of the print job data is created every time the client computer 20 generates print job data, and each print job data has a different name. In the priority D12, the priority of the print job data is stored. The priority of the print job data, for example, may be designated individually every time the user generates print job data, may be previously determined for each user, or may be previously determined for each client computer 20. In this embodiment, the higher the priority stored in the priority D12, the more preferentially the print process is started in the printer 30. In the print data D13, print data necessary for actual printing by the print engine 40 is stored.

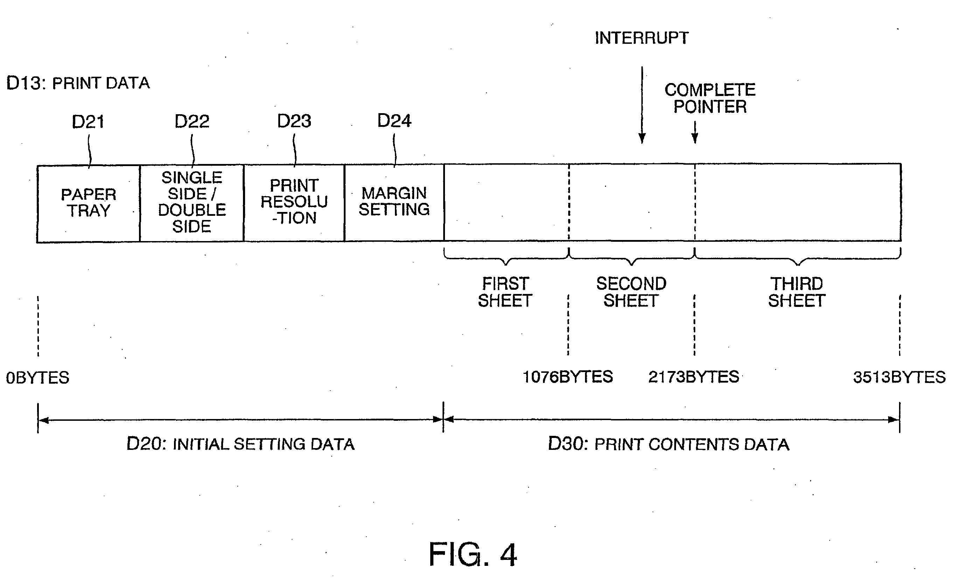

Fig. 4 is a diagram showing the data format of the print data D13 in detail. As shown in Fig. 4, the print data D13 includes initial setting data D20 and print contents data D30.

The initial setting data D20 contains setting information which is to be set in the beginning when printing is started based on its print job data. The print contents data D30 contains print contents information such as character data, font types, font sizes, and image data which are required when printing is performed.

In this embodiment, the initial setting data D20 includes a paper tray D21, single side / double side D22, print resolution D23, and margin setting D24 as data items. In the paper tray D21, information designating a sheet feed tray from which print sheets are fed to perform printing when the printer 30 includes plural sheet feed trays is stored. In the single side / double side D22, information designating whether the printing based on the print job data is performed by single-sided printing or double-sided printing is stored.

In the print resolution D23, information designating a resolution at which the printing based on the print job data is performed is stored. In the margin setting D24, information designating an upper margin width, a lower margin width, a right margin width, and a left margin width in the printing based on the print job data is stored.

In the example shown in Fig. 4, the print contents data D30 contains print contents information on three sheets. Here, three sheets mean three print sheets. In other words, in the case of single-sided printing, it means print contents information on three pages, and in the case of double-sided printing, it means print contents information on five pages or six pages.

In this embodiment, print job data such as shown in Fig. 3 and Fig. 4 is transmitted from the client computer 20 to the printer 30.

Next, as shown in Fig. 2, the job controller 62 (4) reads the print job data "A" from the job spooler 70 in appropriate timing according to the progress of the process in the language interpreter 64, and (5) transmits it in sequence to the language interpreter 64. Incidentally, the transmission of the print job data from the job controller 62 to the language interpreter 64 is not a batch process in which one piece of print job data is transmitted at a time, but a consecutive process in which after a predetermined amount of data out of one piece of print job data has undergone a language interpretation process in the language interpreter 64, the next predetermined amount of print job data is transmitted.

The language interpreter 64 which has received the print job data "A" performs a language interpretation thereof, generates print image data, and (6) transmits the print image data to the print engine 40. The language interpreter 64 also (7) generates one attribute information table TB10 for this print job data "A" in the job attribute database 72.

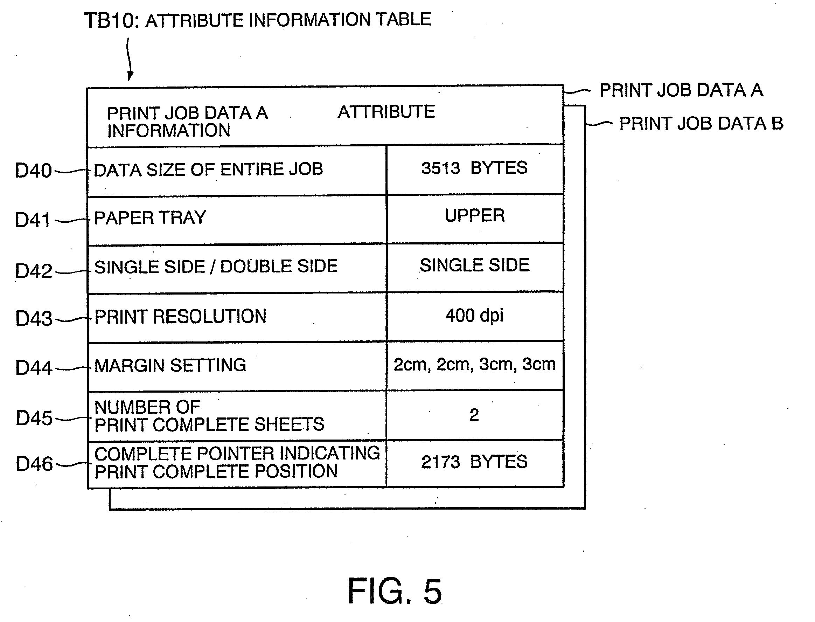

Fig. 5 is a diagram showing an example of the attribute information table TB10. In this embodiment, this attribute information table TB10 is generated for each print job data. Here, detailed attribute information on the print job data "A" is stored in the attribute information table TB10 for the print job data "A". In other words, the attribute information table TB10 in Fig. 5 corresponds to the print job data "A" shown in Fig. 4.

As shown in Fig. 5, the attribute information table TB10 according to this embodiment includes a data size of entire job D40, a paper tray D41, single side / double side D42, print resolution D43, margin setting D44, a number of print complete sheets D45, and a complete pointer indicating print complete position D46 as data items.

The data size of entire job D40 is information of which the job controller 62 notifies the language interpreter 64 when the print job data "A" is transmitted first from the job controller 62 to the language interpreter 64. The example shown in Fig. 5 shows that the data size of the entire print job data "A" is 3513 bytes. The paper tray D41 is data corresponding to the paper tray D21 of the print data D13, and the example in Fig. 5 shows that sheets are fed from an upper tray. The single side / double side D42 is data corresponding to the single side / double side D22 of the print data D13, and the example in Fig. 5 shows that printing is performed by single-sided printing.

The print resolution D43 is data corresponding to the print resolution D23 of the print data D13, and the example in Fig. 5 shows that the printing is performed at 400 dpi. The margin setting D44 is data corresponding to the margin setting D24 of the print data D13, and it shows that the upper margin width is 2 cm, the lower margin width 2 cm, the right margin width 3 cm, and the left margin width 3 cm.

Namely, these data items D41 to D44 are items set by the initial setting data D20 of the print data D13. However, the contents of these data items D41 to D44 may be changed whenever necessary according to print contents information contained in the print contents data D30. For example, it is a case where both the right margin width and the left margin width are set at 2.5 cm in the first sheet and they are both changed to 3 cm in the second sheet. Therefore, in this embodiment, when these data items are changed, the language interpreter 64 reflects information after the change in the attribute information table TB10.

In the number of print complete sheets D45, the number of sheets whose printing is completed by the print engine 40 is stored. In this embodiment, every time the print engine 40 completes printing of one sheet, it notifies the language interpreter 64 of information about this as print complete information, and hence, based on the print complete information, the language interpreter 64 updates the contents of the number of print complete sheets D45 in the attribute information table TB10.

In the complete pointer indicating print complete position D46, the complete pointer indicating the position of the print data D13 in the last sheet whose printing has been completed by the print engine 40 is stored. For example, when the print engine 40 has completed printing of the first sheet, the complete pointer points to the final end of the print data D13 used for printing the first sheet. If the example in Fig 4 is used, the complete pointer D46 points to 1076 bytes. In the example in Fig. 5, the complete pointer D46 points to 2173 bytes, which shows that printing of the second sheet has been completed. In this embodiment, as described above, since the print engine 40 notifies the language interpreter 64 of the print complete information every time printing of each sheet is completed, the language interpreter 64 generates information on the complete pointer D46 based on the print complete information and reflects it in the attribute information table TB10.

It is assumed that (8) the print receiver 60 has received another print job data "B" while the printing of the print job data "A" progresses successively as shown in Fig. 2. The receiver 60 (9) transmits the received print job data "B" to the job controller 62. The job controller 62 (10) stores the print job data "B" in the job spooler 70.

The job controller 62 then compares the priority D12 of the print job data "A" which is being printed and the priority D12 of the print job data "B" which has been newly received. In the example shown in Fig. 2, it is assumed that the priority D12 of the print job data "B" is higher than the priority D12 of the print job data "A". In this case, the job controller 62 transmits an interrupt request to the language interpreter 64 in order to temporarily interrupt the print process of the print job data "A" which is being printed.

The language interpreter 64 which has received the interrupt request interrupts the process of the print job data "A" which is being printed. However, without interrupting printing in the middle of one sheet, printing is continued to the end of the sheet. For example, in the example shown in Fig. 4, when the interrupt request has been received while the second sheet is being printed, printing is continued to the end of the second sheet. Then, the complete pointer D46 is set at the end of the second sheet and stored in the attribute information table TB10. In the example in Fig. 4, the end of the second sheet is 2173rd byte from the beginning of the print data D13, and hence this information of 2173 bytes is stored as the complete pointer D46 in the attribute information table TB10 (See Fig. 5). Incidentally, in this embodiment, as concerns the print job data, the print data D13 contained therein, and so on, commands and data are composed in units of byte.

At a point in time when the print process of the print job data "A" has been interrupted, the job controller 62 (11) reads the print job data "B" from the job spooler 70, and (12) starts transmitting it to the language interpreter 64. The language interpreter 64 performs a language interpretation process of the print job data "B", generates print image data, and (13) transmits the print image data as a print request to the print engine 40.

Furthermore, the language interpreter 64 (14) generates one attribute information table TB10 for the print job data "B" in the job attribute database 72. The language interpreter 64 updates the attribute information table TB10 for the print job data "B" while sequentially executing a print process of the print job data "B".

At a point in time when the print process of the print job data "B" has been completed to the end, the language interpreter 64 deletes the attribute information table TB10 for the print job data "B" from the job attribute database 72, and the job controller 62 deletes the print job data "B" from the job spooler 70. The job controller 62 then (15) reads the print job data "A" again from the job spooler 70. The job controller 62 (16) transmits this data as the print job data "A" for restart printing to the language interpreter 64. In this transmission, all from the beginning of the print job data "A" is transmitted again.

The language interpreter 64 which has received the print job data "A" for restart printing identifies the restart printing, and (17) accesses the job attribute database 72 in order to specify the position and print attribute information about the print data D13 whose restart printing is to be started. Specifically, as shown in Fig. 5, information of the attribute information table TB10 for the print job data "A" stored in the job attribute database 72 is acquired.

Namely, the data size of entire job D40, the paper tray D41, the single side / double side D42, the print resolution D43, the margin setting D44, and the number of print complete sheets D45 are acquired so that print setting required for printing the third sheet is acquired. Moreover, the complete pointer indicating print complete position D46 is acquired to specify a position in the print data D13 at which a language interpretation is to be started. In the example in Fig. 4 and Fig. 5, the complete pointer D46 indicates the 2173rd byte. Hence, the language interpreter 64 restates a language interpretation of the print data D13 directly from the 2174th byte without performing the language interpretation thereof from the 0th byte. Namely, it starts the language interpretation from a byte next to a byte number designated by the complete pointer D46.

The language interpreter 64 then (18) transmits print image data generated by performing the language interpretation of the print data D13 as a print request to the print engine 40. Thus, the printing of the print job data "A" interrupted earlier is restarted from the third sheet. At a point in time when the printing of the print job data "A" has been completed, the language interpreter 64 deletes the attribute information table TB10 for the print job data "A" stored in the job attribute database 72, and the job controller 62 deletes the print job data "A stored in the job spooler 70.

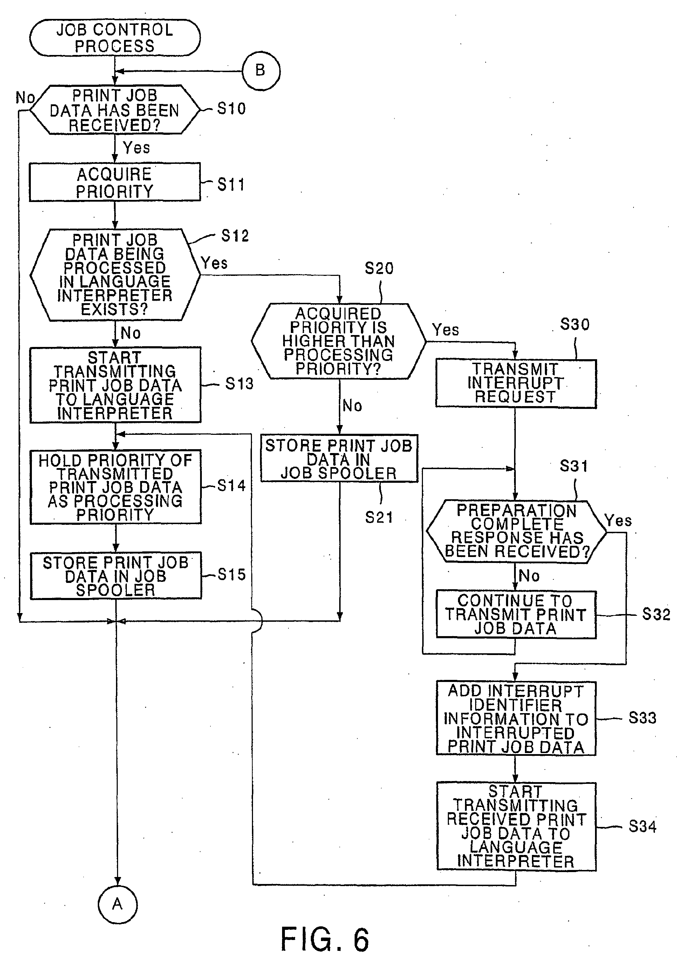

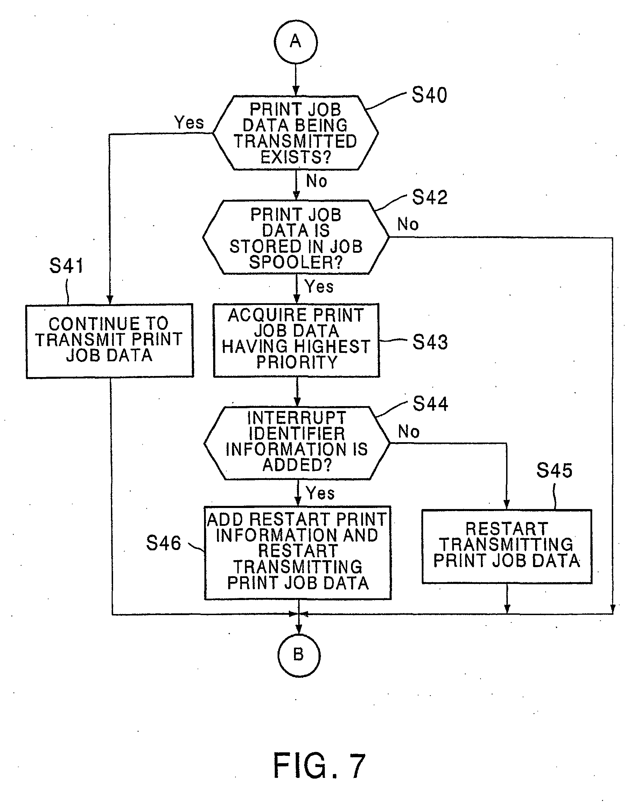

Next, a job control process executed by the job controller 62 will be explained in detail based on Fig. 6 and Fig. 7. Fig. 6 and Fig. 7 are flowcharts for explaining the contents of the job control process.

As shown in Fig. 6, the job controller 62 first judges whether print job data has been received from the receiver 60 (step S10). When the print job data has been received (Step S10: Yes), the job controller 62 acquires the priority D12 of the received print job data (step S11). Then, the print job controller 62 judges whether print job data being processed in the language interpreter 64 exists (step S12).

When the print job data being processed in the language interpreter 64 does not exist (step S12:No), the job controller 62 starts transmitting the received print job data to the language interpreter 64 (step S13). Subsequently, the job controller 62 holds the priority D12 of the transmitted print job data as a processing priority (step S14). Then, it stores the entire print job data in the job spooler 70.

Contrary to this, when it is judged in the aforementioned step S12 that the print job data being processed in the language interpreter 64 exists (step S12: Yes), the job controller 64 judges whether the priority 12 of the print job received this time is higher than a processing priority which is the priority of the print job data undergoing a print process at present (step S20). When the priority D12 of the print job data received this time is not higher than the processing priority as the priority of the print job data undergoing the print process at present (step S20: No) , that is, when the priority D12 of the print job data received this time is equal to or lower than the processing priority, the entire received job data is stored in the job spooler 70 (step S21).

On the other hand, when it is judged in step S20 that the priority D12 of the print job data received this time is higher than the processing priority (step S20: Yes), the job controller 62 transmits an interrupt request to the language interpreter 64 (step S30). The job controller 62 then judges whether a preparation complete response has been received from the language interpreter 64 (step S31). This preparation complete response is a message which is transmitted from the language interpreter 64 to the job controller 62 when the language interpreter 64 has printed the print job data being processed at present to a break before the next sheet, the print sheet is ejected, and the language interpreter 64 is ready for a print process of new print job data.

When the preparation complete response has not been received (step S31: No), the job controller 62 continues to transmit the print job data being printed at present (step S32). This is because further print job data is sometimes necessary in order that the language interpreter 64 may complete the printing of the print job data being printed to a break before the next sheet. Then, the aforementioned process from step S31 is repeated.

On the other hand, when the job controller 62 has received the preparation complete response (step S31: Yes), it adds interrupt identifier information to the print job data whose print process is interrupted and which is stored in the job spooler 70 (step S33). This interrupt identifier information is added so that when the job controller 62 reads the print job data again from the job spooler 70 in order to restart printing, it can identify that the read print job data is for restart printing.

Thereafter, the job controller 62 starts transmitting the received print job data to the language interpreter 64 (step S34). Then, the aforementioned process from step S14 is executed.

When the job controller 62 judges that the print job data has not been received in the aforementioned step S10 (step S10: No), or after the process in step S15 has been completed, the job controller 62 judges whether print job data being transmitted exists (step S40). When the print job data being transmitted exists (step S40: Yes), the job controller 62 continues to transmit the print job data (step S41), and then returns to the aforementioned process in step S10.

On the other hand, when the print job data being transmitted does not exist (step S40: No), the job controller 62 judges whether print job data whose transmission has not been started yet is stored in the job spooler 70 (step S42). When no print job data is stored in the job spooler 70 (step S42: No), the job controller 62 returns to the aforementioned process in step S10.

On the other hand, when the print job data is stored in the job spooler 70 (step S42: Yes), the job controller 62 reads and acquires the stored print job data (step S43). When plural pieces of print job data are stored in the job spooler 70, print job data having the highest priority is read.

Then, the job controller 62 judges whether interrupt identifier information is added to the read print job data (step S44). When the interrupt identifier information is not added (step S44: No), this means that this print job data is not for restart printing, and hence the job controller 62 starts transmitting the print job data as normal print job data to the language interpreter 64 (step S45). Then, it returns to the aforementioned process in step S10.

On the other hand, when the interrupt identifier information is added to the read print job data (step S44: Yes), this means that this print job data is for restart printing, and hence the job controller 62 adds restart print information for restarting the temporarily interrupted printing and restarts transmitting the print job data to the language interpreter 64. Then, it returns to the aforementioned process in step S10.

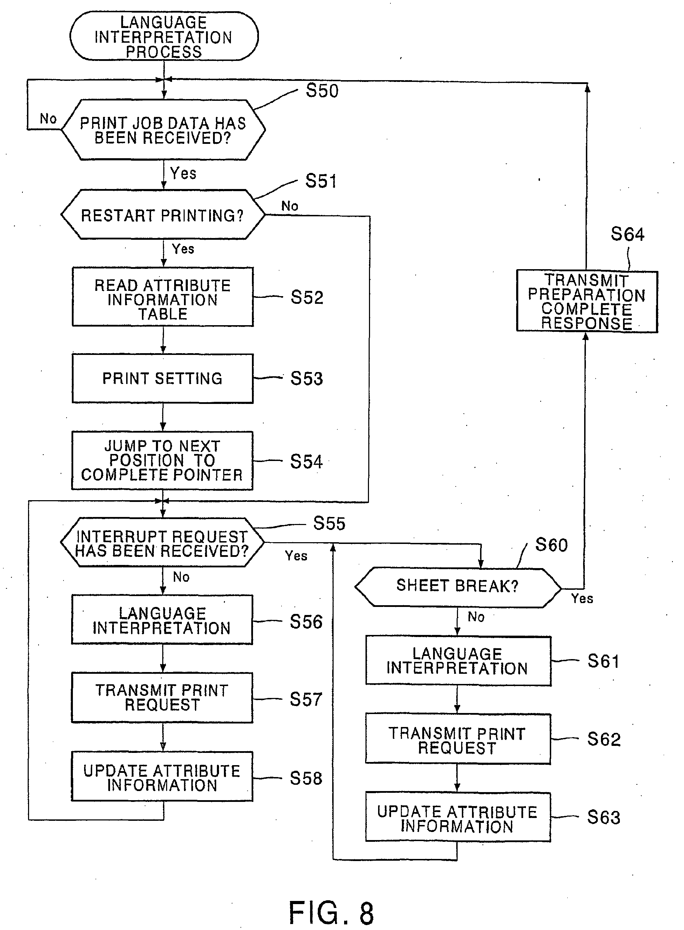

Next, a language interpretation process executed by the language interpreter 64 will be explained in detail based on Fig. 8. Fig. 8 is a flowchart for explaining the contents of the language interpretation process.

As shown in Fig. 8, the language interpreter 64 judges whether print job data has been received from the job controller 62 (step S50). When no print job data has been received (step S50: No), the language interpreter 64 stands by while repeating the process in step S50.

On the other hand, when the print job data has been received (step S50: Yes), the language interpreter 64 judges whether the print job data is for restart printing (step S51). Specifically, it identifies whether restart print information is added to the print job data, and judges that it is for restart printing when the restart print information is added thereto.

When judging that the received print job data is for restart printing (step S51: Yes), the language interpreter 64 reads information stored in the attribute information table TB10 for the print job data from the job attribute database 72 (step S52). Then, the language interpreter 64 performs print setting based on the paper tray D41, the single side / double side D42, the print resolution D43, the margin setting D44, and the number of print complete sheets D45 (step S53). Namely, before starting printing after this, the language interpreter 64 performs necessary print setting such as designation of a sheet feed tray.

Subsequently, the language interpreter 64 jumps to a position next to a position indicated by the complete pointer D46 without performing the language interpretation process of the print data D13 from the beginning (step S54). Namely, the language interpreter 64 retrieves the position of the byte number specified by the complete pointer D46 with the beginning of the received print job data as the 0th byte, and finds out the next byte as a position from which a language interpretation is started.

After having jumped to the position next to the position indicated by the complete pointer D46 in step S54 or when judging that the print job data is not for restart printing in the aforementioned S51 (step S51: No), the language interpreter 64 judges whether an interrupt request has been received from the job controller 62 (step S55).

When no interrupt request has been received (step S55: No), the language interpreter 64 performs a language interpretation of the print job data to generate print image data (step S56). Subsequently, the language interpreter 64 transmits the generated print image data as a print request to the print engine 40 (step S57). Then, it updates the attribute information table TB10 if necessary (step S58), and repeats the process from step S55 for print image data transmitted sequentially.

On the other hand, when it is judged in step S55 that the interrupt request has been received (step S55: Yes), the language interpreter 64 judges whether printing has been performed to a sheet break (step S60). In other words, it judges whether printing has been performed to a break of one sheet by the print engine 40 and the sheet has been ejected.

When printing has not been performed to the sheet break (step S60: No), that is, when the language interpretation has been performed only to the middle of the sheet, and hence printing has been performed only to the middle of the sheet, the language interpreter 64 performs a further language interpretation (step S62), and transmits it as a print request to the print engine 40 (step S62). Subsequently, it updates the contents of the attribute information table TB10 stored in the job attribute database 72 as required (step s63). Then, the language interpreter 64 repeats the process from step S60.

On the other hand, when judging that printing has been performed to the sheet break (step S60: Yes), the language interpreter 64 transmits a preparation complete response to the job controller 62 (step S64). Then, it returns to the aforementioned process in step S50.

As described above, according to the printer 30 of this embodiment, when interrupt printing occurs, the position in the print data D13 of print job data corresponding to a sheet to which printing has been completed is held as the complete pointer D46 in the attribute information table TB10, and information on the setting of printing set before the complete pointer D46 is also held therein. Hence, when interrupted printing is restarted, it is possible to acquire the information on the setting of printing from the attribute information table TB10, and restart a language interpretation from a position next to the position specified by the complete pointer D46 of the print job data. Consequently, it becomes unnecessary to restart the language interpretation from the beginning of the print job data, whereby the users' waiting time before restart printing is started can be reduced as much as possible.

Moreover, printing is interrupted in the position of a sheet break, whereby when interrupt printing occurs, the ejection of a sheet whose printing is interrupted halfway can be avoided. Especially in this embodiment, even if interrupt printing occurs, if the interrupt printing occurs in the middle of a sheet, a print process is continued until the printing of this sheet is completed. As a result, even in a laser page printer which can not stop halfway if the print engine 40 starts driving, concerning a sheet in which an interrupt occurs, a normal print result can be obtained.

### [Second Embodiment]

In the aforementioned first embodiment, when interrupt printing is accepted during a print process, printing of a sheet being processed is completed to the end thereof, whereas in the second embodiment, at a point in time when the interrupt printing is accepted, the print process is interrupted even in the middle of the sheet, and the interrupt printing is immediately started. Further details will be given below.

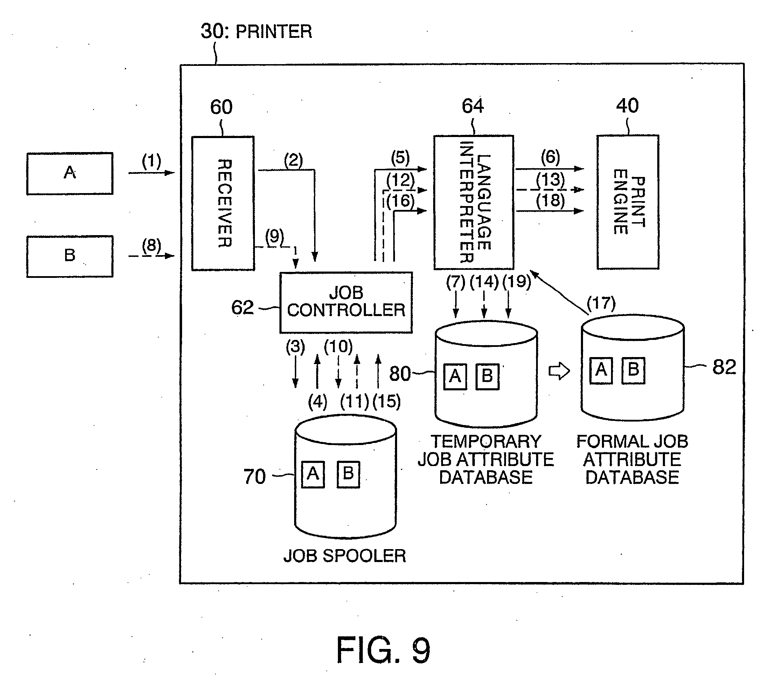

Fig. 9 is a block diagram explaining a process of interrupt printing in a print system according to this embodiment, and corresponds to Fig. 2 in the aforementioned first embodiment.

Portions different from the aforementioned first embodiment will be explained. The printer 30 according to this embodiment includes a temporary job attribute database 80 and a formal job attribute database 82 in place of the job attribute database 72. In this embodiment, these temporary job attribute database 80 and formal job attribute database 82 are formed in the hard disk 38. However, both or either of them may be formed in the RAM 34.

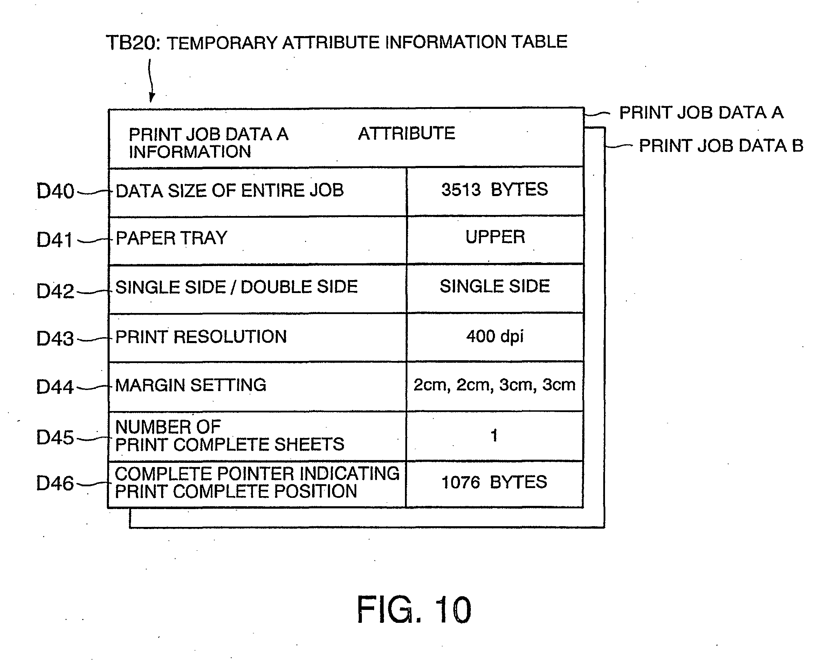

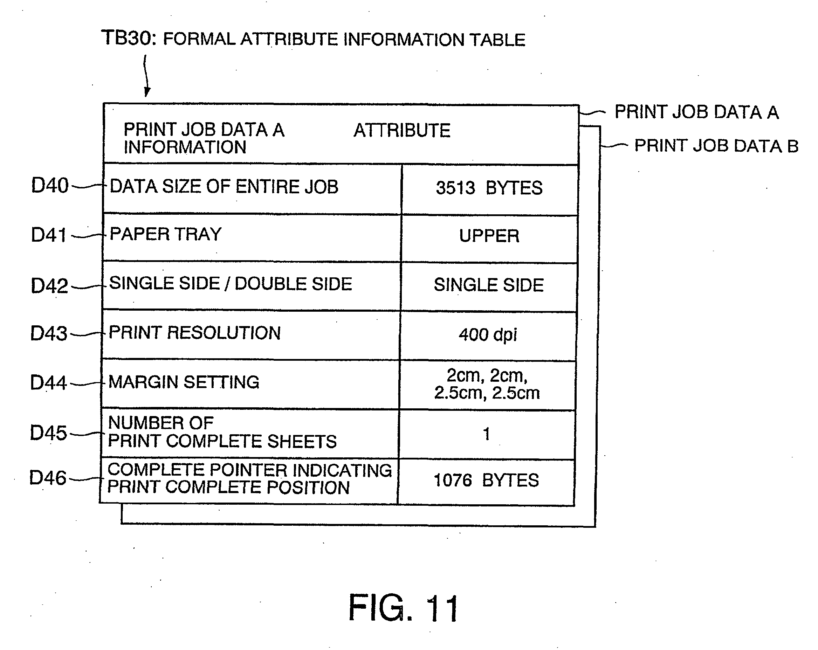

Fig. 10 is a diagram showing an example of the structure of a temporary attribute information table TB20 formed in the temporary job attribute database 80, and Fig. 11 is a diagram explaining the structure of a formal attribute information table TB30 formed in the formal job attribute database 82.

The structures of these temporary attribute information table TB20 and formal attribute information table TB30 are the same as that of the attribute information table TB10 in the aforementioned first embodiment. However, the language interpreter 64 stores attribute information on print job data undergoing a print process in the temporary attribute information table TB20 formed in the temporary job attribute database 80. When receiving a print complete message that printing of one sheet has been completed from the print engine 40, the language interpreter 64 transfers the contents of the temporary attribute information table TB20 to the formal attribute information table TB30.

When receiving an interrupt request, the language interpreter 64 immediately interrupts the print process even in the middle of a sheet and starts interrupt printing. When printing of interrupted print job data is restarted, attribute information is read from the formal attribute information for the print job data and the printing thereof is restarted.

If an explanation is given with the example in Fig. 9, processes from (1) to (5) are the same as those in the aforementioned first embodiment. Then, the language interpreter 64 which has received the print job data "A" performs a language interpretation thereof to create print image data and (6) transmits it to the print engine 40. Furthermore, the language interpreter 64 (7) generates one temporary attribute information table TB20 for this print job data "A" in the temporary job attribute database 80. Then, it sequentially advances a print process. If there is any change in information on the data items D41 to D46 contained in the temporary attribute information table TB20 in the course of the advance of the print process, the language interpreter 64 reflects the contents of this change in the temporary attribute information table TB20. Moreover, when receiving a print complete message that printing of one sheet has been completed from the print engine 40, the language interpreter 64 stores information indicating the position of the completion in the complete pointer D46 of the temporary attribute information table TB20 and simultaneously transfers the contents of the temporary attribute information table TB20 to the formal attribute information table TB30.

It is assumed that in the middle of the aforementioned sequential advance of the printing of the print job data "A", (8) the print receiver 60 receives another print job data "B" as shown in Fig. 9. The receiver 60 (9) transmits this received print job data "B" to the job controller 62. The job controller 62 (10) stores the print job data "B" in the job spooler 70.

If it is assumed that the priority D12 of the print job data "B" is higher than the priority D12 of the print job data "A" as in the aforementioned first embodiment, the job controller 62 transmits an interrupt request to the language interpreter 64 so as to temporarily interrupt a print process of the print job data "A" being printed at present.

The language interpreter 64 which has received the interrupt request immediately interrupts the process of the print job data "A" being printed. Namely, the print process is interrupted even in the middle of one sheet.

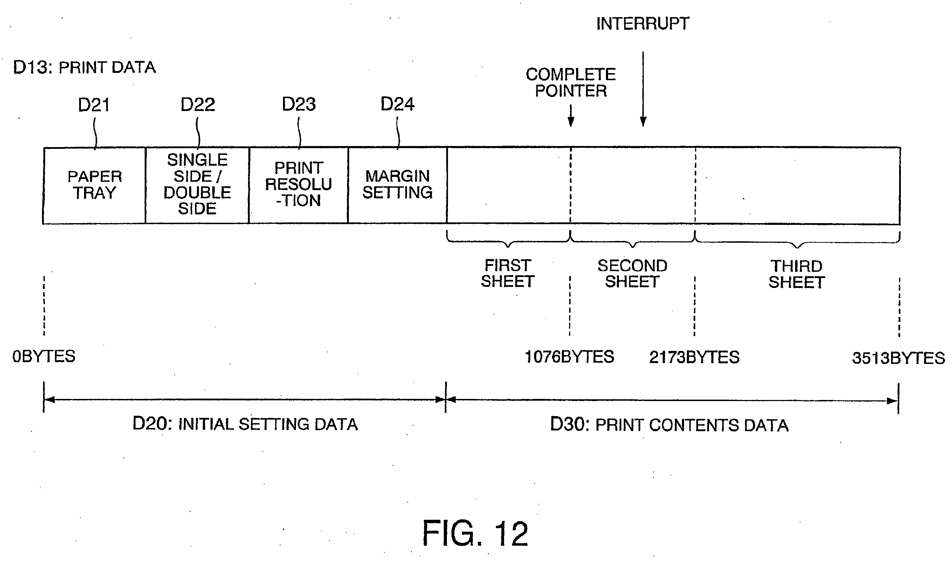

Fig. 12 is a diagram corresponding to Fig. 4 in the aforementioned first embodiment. When the interrupt request has been received while the second sheet is being printed in the example in Fig. 12, the print process is interrupted even in the middle of printing of the second sheet, and the print sheet is forcibly ejected. Therefore, since the second sheet is not normally printed, the complete pointer D46 needs to point to the end of the first sheet, and hence the complete pointer D46 of the formal attribute information table TB30 points to the end of the first sheet.

Furthermore, there is a possibility that the contents of the data items D41 to D45 are changed while the second sheet is being printed after the completion of the printing of the first sheet, but since the printing of the second sheet has not been completed yet, the contents of the change are not reflected in the formal attribute information table TB30 although they are reflected in the temporary attribute information table TB20. In the example in Fig. 10 and Fig. 11, as shown in Fig. 11, both the right margin width and the left margin width are set at 2.5 cm in the first sheet, and as shown in Fig. 10, they are both changed to 3 cm in the second sheet, but since the printing of the second sheet has not been completed yet, this change is not reflected in the formal attribute information table TB30 shown in Fig. 11.

At a point in time when the print process of the print job data "A" has been interrupted, the job controller 62 (11) adds interrupting identifier information to the print job data whose print process is interrupted and which is stored in the job spooler and reads the print job data "B" form the job spooler 70, and (12) starts transmitting it to the language interpreter 64. The language interpreter 64 performs a language interpretation process of the print job data "B", generates print image data, and (13) transmits the print image data as a print request to the print engine 40.

Furthermore, the language interpreter 64 (14) generates one temporary attribute information table TB20 for the print job data "B" in the temporary job attribute database 80. The language interpreter 64 updates the temporary attribute information table TB20 for the print job data "B" while sequentially performing a print process of the print job data "B". Also, when receiving a print complete message that printing of one sheet has been completed from the print engine 40, it transfers the temporary attribute information table TB20 to the formal job attribute database 82.

At a point in time when the print process of the print job data "B" has been completed to the end, the language interpreter 64 deletes the temporary attribute information table TB20 for the print job data "B" from the temporary job attribute database 80 and deletes the formal attribute information table TB30 for the print job data "B" from the formal job attribute database 82. The job controller 62 deletes the print job data "B" from the job spooler 70.

The job controller 62 then (15) reads the print job data "A" again from the job spooler 70. It (16) transmits this data as the print job data "A" for restart printing to the language interpreter 64. In this transmission, all from the beginning of the print job data "A" is transmitted again.

The language interpreter 64 which has received the print job data "A" for restart printing identifies the restart printing, and (17) accesses the formal job attribute database 82 in order to specify a position in the print data D13 from which a language interpretation is to be restarted and print attribute information. Specifically, as shown in Fig. 11, information of the formal attribute information table TB30 for the print job data "A" stored in the formal job attribute database 82 is acquired.

Namely, the data size of the entire job D40, the paper tray D41, the single side / double side D42, the print resolution D43, the margin setting D44, and the number of print complete sheets D45 are acquired so that print setting required for printing the second sheet is acquired. Moreover, the complete pointer indicating the print complete position D46 is acquired to specify a position in the print data D13 from which a language interpretation is to be started. In the example in Fig. 11 and Fig. 12, the complete pointer D46 indicates the 1076th byte. Hence, the language interpreter 64 restates a language interpretation of the print data D13 directly from the 1077th byte without performing the language interpretation thereof from the 0th byte. Namely, it starts a language interpretation process from a byte next to a byte number indicated by the complete pointer D46.

The language interpreter 64 then (18) transmits print image data generated by performing the language interpretation of the print data D13 as a print request to the print engine 40. Thus, the printing of the print job data "A" interrupted earlier is restarted from the second sheet.

As described earlier, while executing the print process of the print job data "A" sequentially, the language interpreter 64 updates the temporary attribute information table TB20 for the print job data "A". When receiving a print complete message that printing of one sheet has been completed from the print engine 40, the language interpreter 64 transfers the temporary attribute information table TB20 to the formal job attribute database 82.

At a point in time when the printing of the print job data "A" has been completed, the language interpreter 64 deletes the temporary attribute information table TB20 for the print job data "A" from the temporary job attribute database 80 and deletes the formal attribute information table TB 30 for the print job data "A" from the formal job attribute database 82. The job controller 62 deletes the print job data "A" from the job spooler 70.

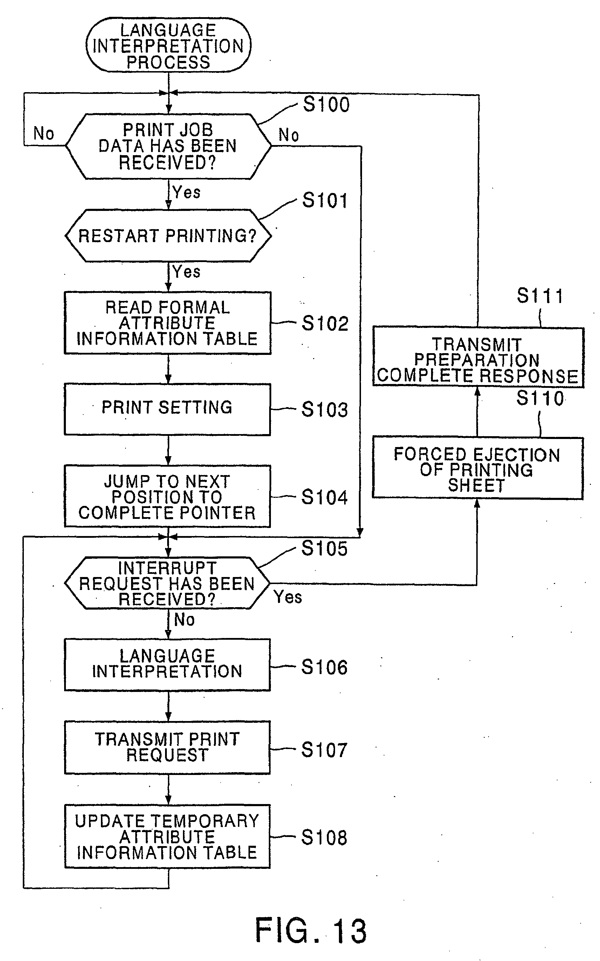

Next, a language interpretation process executed by the language interpreter 64 will be explained in detail based on Fig. 13. Fig. 13 is a flowchart for explaining the contents of the language interpretation process.

As shown in Fig. 13, the language interpreter 64 judges whether print job data has been received from the job controller 62 (step S100). When no print job data has been received (step S100: No), the language interpreter 64 stands by while repeating the process in step S100.

On the other hand, when the print job data has been received (step S100: Yes), the language interpreter 64 judges whether the print job data is for restart printing (step S101). Specifically, it identifies whether restart print information is added to the print job data, and judges that it is for restart printing when the restart print information is added thereto.

When judging that the received print job data is for restart printing (step S101: Yes), the language interpreter 64 reads information stored in the formal attribute information table TB30 for the print job data from the formal job attribute database 82 (step S102). Then, the language interpreter 64 performs print setting based on the paper tray D41, the single side / double side D42, the print resolution D43, the margin setting D44, and the number of print complete sheets D45 held in the read formal attribute information table TB30 (step S103). Namely, before starting printing after this, the language interpreter 64 performs necessary print setting such as designation of a sheet feed tray.

Subsequently, the language interpreter 64 jumps to a position next to a position indicated by the complete pointer D46 without performing the language interpretation process of the print data D13 from the beginning (step S104). Namely, in the example in Fig. 11, the complete pointer D46 designates the 1076th byte, and hence setting is performed so that the language interpretation is restarted from the next 1077th byte.

After having jumped to the position next to the position indicated by the complete pointer in step S104 or when judging that the print job data is not for restart printing in step S101 (step S101: No), the language interpreter 64 judges whether an interrupt request has been received from the job controller 62 (step S105).

When the interrupt request has not been received (step S105: No), the language interpreter 64 performs a language interpretation of the print job data to generate print image data (step S106). Subsequently, the language interpreter 64 transmits the generated print image data as a print request to the print engine 40 (step S107). Then, it updates the temporary attribute information table TB20 if necessary (step S108), and repeats the process from step S105 for print image data transmitted sequentially.

On the other hand, when judging that the interrupt request has been received in step S105 (step S105: Yes), the language interpreter 64 interrupts printing even in a situation in which printing has been done only to the middle of one sheet, and instructs the print engine 40 to forcibly eject the print sheet (step S110). Then, it returns to the aforementioned process in step S100.

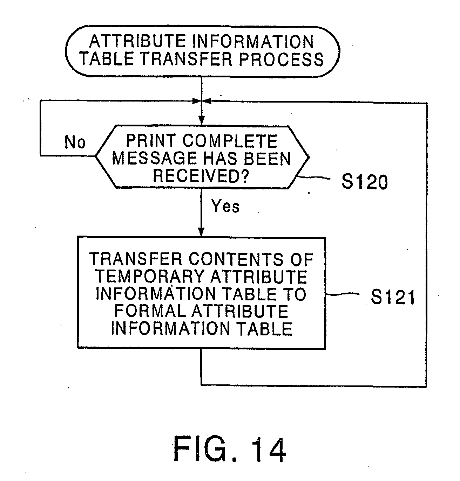

Next, an attribute information table transfer process executed by the language interpreter 64 will be explained in detail based on Fig. 14. Fig. 14 is a flowchart for explaining the contents of the attribute information table transfer process. In this embodiment, the attribute information table transfer process as well as the language interpretation process in Fig. 13 is executed by the language interpreter 64. Namely, in this embodiment, this attribute information table transfer process is also realized by a task.

As shown in Fig. 14, in the attribute information table transfer process, the language interpreter 64 judges whether a print complete message indicating that printing of one sheet has been completed has been received from the print engine 40 (step S120). When the print complete message has not been received (step S120: No), the language interpreter 64 stands by while repeating the process in step S120.

On the other hand, when the print complete message has been received (step S120: Yes), the language interpreter 64 transfers the temporary attribute information table TB20 for the print job data stored in the temporary job attribute database 80 as the formal attribute information table TB30 to the formal job attribute database 82 (step S121). The language interpreter 64 then returns to the aforementioned process in step S120.

It should be noted that a job control process executed by the job controller 62 is the same as that in Fig. 6 in the aforementioned first embodiment, and hence the explanation thereof is omitted.

As described above, according to the printer 30 of this embodiment, when interrupt printing occurs, a position in the print data D13 of print job data corresponding to a sheet to which printing has been completed is held as the complete pointer D46 in the formal attribute information table TB30, and information on the setting of printing set before the complete pointer D46 is also held therein. Hence, when interrupted printing is restarted, it is possible to acquire the information on the setting of printing from the formal attribute information table TB30, and start a language interpretation from a position next to the position indicated by the complete pointer D46 of the print job data. Consequently, it becomes unnecessary to restart the language interpretation from the beginning of the print job data, whereby the users' waiting time before restart printing is started can be reduced as much as possible.

Moreover, when an interrupt occurs, even in the middle of printing one sheet, the printing is interrupted, and interrupt printing is given priority, whereby print job data having higher priority can be printed more preferentially. Particularly, this embodiment can be applied to a serial printer such as an ink jet printer which, even in the middle of a print process of one sheet, can interrupt the print process.

Further, the contents of the temporary attribute information table TB20 are transferred to the formal attribute information table TB30 after printing of one sheet has been completed, and hence even if information on print setting is changed between the complete pointer D46 of the print data D13 and the point of occurrence of an interrupt, a normal print result can be obtained by acquiring information on print setting from the formal attribute information table TB30 when printing is restarted.

It should be noted that the present invention is not limited to the aforementioned embodiments, and various changes may be made therein. For example, information on a restart position from which a language interpretation is restarted in restart printing is specified by the complete pointer D46 which points to the end of a sheet to which printing has been completed in the aforementioned embodiments, but a start position from which the language interpretation is restarted may be held as restart position information. For example, in the first embodiment, information indicating the 2174th byte may be held as restart position information, and in the second embodiment, information indicating the 1077th byte may be held as restart position information. In other words, information capable of specifying a position from which a language interpretation is restarted in some way has only to be held as restart position information.

Moreover, the structure of the aforementioned print job data and structures of various types of databases and data tables are not limited to those in the aforementioned embodiments, and various structures are applicable. Especially, information on print setting to be held in the attribute information table TB10, the temporary attribute information table TB20, and the formal attribute information table TB30 is described as an example, and various kinds of information can be held according to the need in a printer. Namely, information on print setting necessary to restart temporarily interrupted printing is required to be held in these tables.

Further, the timing of deleting print job data whose printing has been completed from the job spooler 70 may be any time after the completion of printing. For example, print job data is deleted immediately after the completion of its printing in the aforementioned embodiments, but the print job data may be held in the job spooler 70 for a fixed period of time, so that the print job data can be reprinted only by a user instructing the printer 30 to reprint the print job data after the completion of printing.

Furthermore, although, as shown in Fig. 3, the print job data contains the priority D12 thereof in the aforementioned embodiments, the priority D12 need not be necessarily contained in each print job data. For example, it is suitable that priority is previously set for each user, and that the printer 30 which has received print job data judges its priority based on the user name D10 contained in the print job data.

Besides, as for each process explained in the aforementioned embodiments, it is possible to record a program to execute each process on a record medium such as a flexible disk, a CD-ROM (Compact Disc-Read Only Memory), a ROM, a memory card, or the like and distribute this program in the form of the record medium. In this case, the aforementioned embodiments can be realized by making the printer 30 read the record medium on which this program is recorded and execute this program.

The printer 30 sometimes has other programs such as an operating system, other application programs, and the like. In this case, by using these other programs in the printer 30, a command, which calls a program to realize a process equal to that in the aforementioned embodiments out of programs in the printer 30, may be recorded on the record medium.

Further, such a program can be distributed not in the form of the record medium but in the form of a carrier wave via a network. The program transmitted in the form of the carrier wave over the network is incorporated in the printer 30, and the aforementioned embodiments can be realized by executing this program.

Furthermore, when being recorded on the record medium or transmitted as the carrier wave over the network, the program is sometimes encrypted or compressed. In this case, the printer 30 which has read the program from the record medium or the carrier wave needs to execute the program after decrypting or expanding it.

As explained above, according to the printer of this embodiment, when a print job interrupted by interrupt printing is restarted, a language interpretation can be started from a position in data on the print job whose printing is to be restarted, whereby the user's waiting time can be reduced as much as possible.

## Claims

1. A printer comprising:
an interrupt print acceptor which accepts interrupt printing;
an interrupter which interrupts a print job undergoing a print process when the interrupt acceptor is accepted the interrupt printing;
a restart position information holder which holds a position in data on the print job, from which a language interpretation is to be restarted when the print process of the print job interrupted by the interrupter is restarted later, as restart position information;
a print setting information holder which holds information on print setting, which is set for the print job in the position in the data on the print job designated by the restart position information, as print setting information; and
a print restarter which performs print setting based on the print setting information held by the print setting information holder and performs the language interpretation from the position in the data on the print job designated by the restart position information held by the restart position information holder, after the interrupt printing is completed.

2. The printer according to claim 1, wherein the restart position information is set at a break between one sheet and its next sheet in the data on the print job.

3. The printer according to claim 2, further comprising a print continuator which, if the printing of the print job undergoing the print process is in the middle of one sheet when the interrupt print acceptor is accepted the interrupt printing, continues the printing to the end of the sheet.

4. The printer according to claim 3, wherein the restart position information is set at a break between the sheet printed to the end and its next sheet in the data on the print job.

5. The printer according to claim 4, wherein the print setting information is sequentially held in the print setting information holder while the language interpretation of the data on the print job is performed.

6. The printer according to claim 5, wherein the print setting information held in the print setting information holder is generated for each print job and deleted when a print process of the print job is completed.

7. The printer according to claim 1, further comprising a forced ejector which, even if the printing of the print job undergoing the print process is in the middle of one sheet when the interrupt print acceptor is accepted the interrupt printing, immediately interrupts the print process and forcibly ejects the sheet undergoing the print process.

8. The printer according to claim 7, wherein the restart position information is set at a break between the sheet whose printing is interrupted and its previous sheet in the data on the print job.

9. The printer according to claim 8, wherein the print setting information is sequentially held in a temporary holder while the language interpretation of the data on the print job is performed, and
at a point in time when the printing of one sheet is completed, the print setting information held in the temporary holder is transferred to the print setting information holder.

10. The printer according to claim 9, wherein the print setting information held in the temporary holder and the print setting information held in the print setting information holder are generated for each print job and deleted from the temporary holder and the print setting information holder when a print process of the print job is completed.

11. The printer according to claim 1, further comprising:
a print job storage in which a received print job is stored; and
a restart print job transmitter which reads the print job whose print process was interrupted and transmits the data on the print job from the beginning to the print restarter after the interrupt printing is completed.

12. The printer according to claim 11, wherein the print job stored in the print job storage is not deleted when the print process of the print job is started, but it is deleted when the print process of the print job is completed.

13. A method of controlling a printer comprising:
an interrupt print accepting step of accepting interrupt printing;
an interrupting step of interrupting a print job undergoing a print process when the interrupt printing is accepted in the interrupt accepting step;
a restart position information holding step of holding a position in data on the print job, from which a language interpretation is to be restarted when the print process of the print job interrupted in the interrupting step is restarted later, as restart position information in a restart position holder;
a print setting information holding step of holding information on print setting, which is set for the print job in the position in the data on the print job designated by the restart position information, as print setting information in a print setting information holder; and
a print restarting step of performing print setting based on the print setting information held in the print setting information holder and performing the language interpretation from the position in the data on the print job designated by the restart position information held in the restart position information holder, after the interrupt printing is completed.

14. A program which causes a printer to execute:
an interrupt print accepting step of accepting interrupt printing;
an interrupting step of interrupting a print job undergoing a print process when the interrupt printing is accepted in the interrupt accepting step;
a restart position information holding step of holding a position in data on the print job, from which a language interpretation is to be restarted when the print process of the print job interrupted in the interrupting step is restarted later, as restart position information in a restart position information holder;
a print setting information holding step of holding information on print setting, which is set for the print job in the position in the data on the print job designated by the restart position information, as print setting information in a print setting information holder; and
a print restarting step of performing print setting based on the print setting information held in the print. setting information holder and performing the language interpretation from the position in the data on the print job designated by the restart position information held in the restart position information holder, after the interrupt printing is completed.

15. A record medium on which a program is recorded, the program causing a printer to execute:
an interrupt print accepting step of accepting interrupt printing;
an interrupting step of interrupting a print job undergoing a print process when the interrupt printing is accepted in the interrupt accepting step;
a restart position information holding step of holding a position in data on the print job, from which a language interpretation is to be restarted when the print process of the print job interrupted in the interrupting step is restarted later, as restart position information in a restart position information holder;
a print setting information holding step of holding information on print setting, which is set for the print job in the position in the data on the print job designated by the restart position information, as print setting information in a print setting information holder; and
a print restarting step of performing print setting based on the print setting information held in the print setting information holder and performing the language interpretation from the position in the data on the print job designated by the restart position information held in the restart position information holder, after the interrupt printing is completed.
